# EUROPÄISCHE PATENTSCHRIFT

(11) **EP 2 196 368 B1**
(45) Veröffentlichungstag und Bekanntmachung des Hinweises auf die Patenterteilung: **04.11.2015**
(21) Anmeldenummer: 09178379.5
(22) Anmeldetag: 08.12.2009
(51) Int. Cl.: B60T 7/10, B60T 11/04, F16C 1/22

(54) **Seilzugeinstellung**
Cable adjustment
Installation de câble de commande

(30) Priorität: 09.12.2008 DE 202008016204 U
(43) Veröffentlichungstag der Anmeldung: 16.06.2010
(73) Patentinhaber: AL-KO Kober AG, 89359 Kötz (DE)
(72) Erfinder: Sailer, Wolfgang, 6290 Mayrhofen (AT)
(74) Vertreter: Ernicke, Klaus Stefan

(56) Entgegenhaltungen:
- DE-A1- 4 109 887
- DE-A1- 19 618 423
- DE-A1-102004 004 378
- DE-U1-202004 005 247

## Beschreibung

Die Erfindung betrifft eine Seilzugeinstellung mit den Merkmalen im Oberbegriff des Hauptanspruchs.

Eine ähnliche Seilzugeinstellung ist aus der WO 97/26162 A1 bekannt. Sie besteht aus einem Klemmgehäuse, in dem ein Zugelement und ein Klemmelement beweglich geführt sind und ein Rastgesperre bzw. eine gegenseitige Verzahnung aufweisen. Das Zugelement und das Klemmelement können mittels einer Keilführung am Rastgesperre in Eingriff miteinander gebracht werden. In Lösestellung kann der Eingriff durch einen Anschlag geöffnet werden. Das Klemmelement ist relativ zum Klemmgehäuse in Anzugrichtung begrenzt beweglich gelagert und wird von einer Feder an der Rückseite des Klemmgehäuses belastet, welche die Keilführung in Eingriff zu bringen trachtet. Das Klemmgehäuse ist mit einem Bremshebel und das Zugelement mit einem Seilzug verbunden. Die Seilzugeinstellung hat den Zweck, auftretenden Verschleiß in der Bremsanlage eines Fahrzeugs, insbesondere in der Feststellbremse reversibel zu beseitigen. Falls Vereisungen oder andere die Bremsbacken beeinflussende Faktoren auftreten, die von der Seilzugeinstellung als Verschleiß fehlverstanden werden könnten und kompensiert werden, kann dieser Kompensationshub bei einer Normalisierung der Bremse wieder aufgehoben werden.

Aus der WO 98/57832 ist eine Weiterentwicklung der vorgenannten Brems- oder Seilzugeinstellung bekannt, die mit einer Zwangsführung für das Klemmelement ausgebildet ist, um das Rastgesperre zwischen dem Zugelement und dem Klemmelement in Ruhe- und Ausgangsstellung des Handbremshebels zuverlässig lösen zu können, damit die Verschleißkompensation unter Federbelastung des Zugelements ohne Behinderungen stattfinden kann.

Die DE 10 2004 016 623 B3 zeigt eine weitere Seilzugeinstellung der vorgenannten Art, bei der am Klemmgehäuse ein auf das Klemmelement im Bereich von dessen Steg und/oder dessen Kopf einwirkendes Andrückelement in Form eines Federbügels angeordnet ist. Dieser übt eine zum Zugelement und zum Rastgesperre gerichtete Andrückkraft auf das Klemmelement aus.

Aus der WO 95/27642 A1 ist eine andere Seilzugeinstellung bekannt, bei der außenseitig am Klemmgehäuse gebogene Blattfedern angebracht sind, welche auf die Frontseiten von Klemmelementköpfen drücken. Ein Andrückelement ist nicht vorhanden. Die beidseits der Zugstange angeordneten Klemmelemente sind an der Zugstange verschieblich gelagert und geführt. Die den Bremsenverschleiß kompensierende Feder ist als Zugfeder ausgebildet und zwischen der Zugstange und einem umgebenden Bremsengestell eingehängt.

Die DE 10 2006 056 971 A1 offenbart eine weitere Seilzugeinstellung der genannten Art, die ein Klemmgehäuse mit einem Klemmelement und einem Zugelement nebst einem Rastgesperre und einer Keilführung aufweist. An der Frontseite des Klemmgehäuses ist eine Federaufnahme mit einem Federträger angeordnet, welcher eine auf das Zugelement in Anzugrichtung wirkende Feder aufnimmt. Der Federträger besitzt am rückwärtigen Ende Arme, die außenseitig das Klemmgehäuse umgreifen.

Auch die DE 20 2004 005 247 U1 zeigt eine solche Seilzugeinstellung der genannten Art mit einem Klemmgehäuse, einem Klemmelement, einem Zugelement sowie einem Rastgesperre und einer Keilführung. An der Frontseite des Klemmgehäuses ist eine Spannfeder in nicht näher bezeichneter Weise angeordnet, welche auf das Zugelement in Anzugrichtung einwirkt.

Es ist Aufgabe der vorliegenden Erfindung, die Seilzugeinstellung noch weiter zu verbessern.

Die Erfindung löst diese Aufgabe mit den Merkmalen im Hauptanspruch.

Die beanspruchte Federaufnahme und insbesondere der hierbei eingesetzte Federträger haben Vorteile für die konstruktiv einfache, leicht zu montierende, betriebssichere und kostengünstige Ausbildung der Seilzugeinstellung. Dies ist für den bevorzugten Einsatzbereich im Fahrzeug- und insbesondere Automobilbau günstig.

Der Eingriff des Federträgers in das Klemmgehäuse und dessen Innenraum hat Vorteile für die Störsicherheit der Fixierung und die Führung des Federträgers. Die Seilzugeinstellung kann außerdem schmal bauen. Ferner ergeben sich Vorteile für eine einfache, schnelle und kostengünstige Montage, wobei Fehlbedienungen weitestgehend ausschließbar sind.

Der Federträger lässt sich besonders einfach und kostengünstig herstellen und auch mit den anderen Teilen des Klemmgehäuses verbinden. Er kann mehrere Funktionen für die Seilzugeinstellung erfüllen.

Neben der reinen Tragfunktion für eine oder mehrere Federn kann der Federträger auch eine Führung für das Zugelement bieten. Er kann mit einer Klemmvorrichtung zusammenwirken, die eine lösbare Schnappverbindung des Federträgers mit dem Klemmgehäuse ermöglicht. Hierfür sind federnde Verbindungsarme von Vorteil, die in den inneren Hohlraum des Klemmgehäuses ragen und hier einerseits für die Klemmverbindung sorgen und zugleich einen Bestandteil der Zugstangenführung darstellen können. Bei eingebauter Zugstange ist außerdem die Klemmvorrichtung gesichert und kann sich nicht unbeabsichtigt lösen. Dieses ist erst nach Entfernen des Zugelements bei einer bewussten Demontage möglich.

Der Federträger kann ferner mit einer Montagesicherung zusammenwirken und kann hierzu eine Bügelführung und eine Verankerung für einen Sicherungsbügel der Montagesicherung bieten. Die Montagesicherung kann die Seilzugeinstellung in einer gespannten Federlage und mit einer großen Gesamtlänge fixieren, die günstig für das zwanglose Einhängen von einem oder mehreren Bremszügen ist. Die Montagesicherung kann selbsttätig bei einem ggf. erstmaligen Betätigen eines Handbremshebels oder eines anderen Betätigungsorgans gelöst werden was komfortabel und montagefreundlich ist. Sie kann alternativ manuell mit einem Werkzeug gelöst werden.

Über die Bügelführung kann der Sicherungsbügel definierte Lagen einnehmen und insbesondere eine gesicherte Lösestellung bei geöffneter Montagesicherung einnehmen, in der er den Betrieb der Seilzugeinstellung nicht stört. Die Bügelführung kann mehrseitig den Sicherungsbügel führen und ggf. auch über einen Montagespalt klemmend festhalten.

Der Federträger kann auch die Funktion einer Zwangsführung für das Klemmelement erfüllen und hierfür z.B. eine Anlaufschräge aufweisen.

Die Einbindung mehrerer Funktionen in den Federträger, der hierfür angeformte Funktionsteile aufweisen kann, verringert auch die Teilezahl und den Montageaufwand. Der vorzugsweise einteilige Federträger kann kostengünstig als Spritz- oder Gießteil aus Kunststoff, Metall oder anderen geeigneten Materialien, z.B. auch Verbundmaterialien, hergestellt werden.

Die Seilzugstellung kann ansonsten in ihren anderen Bestandteilen gleich oder ähnlich wie in der DE 20 2006 018 319 U1 ausgebildet sein und dabei die entsprechenden konstruktiven und funktionellen Vorteile und Eigenschaften aufweisen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Seilzugeinstellung in perspektivischer Darstellung,
- Figur 2:: die Seilzugeinstellung von Figur 1 in einer Explosionsdarstellung ihrer Teile,
- Figur 3:: eine Seitenansicht der Seilzugeinstellung von Figur 1,
- Figur 4:: einen Querschnitt durch die Seilzugeinstellung gemäß Schnittlinie IV-IV von Figur 3 in einer vergrößerten Darstellung,
- Figur 5:: einen Längsschnitt durch die Seilzugeinstellung entlang Schnittlinie V-V von Figur 3,
- Figur 6:: eine vergrößerte Darstellung des Klemmgehäuses und der Federaufnahme mit einem Federträger von Figur 5,
- Figur 7:: eine geklappte Draufsicht auf die Seilzugeinstellung gemäß Pfeil VI von Figur 3,
- Figur 8:: eine Stirnansicht der Seilzugeinstellung gemäß Pfeil VIII von Figur 7 und
- Figur 9:: eine vergrößerte perspektivische Darstellung des Federträgers und eines Klemmgehäuseteils.

Die Erfindung betrifft eine Seilzugeinstellung (1) und eine damit ausgerüstete Bremseinrichtung, insbesondere eine Feststellbremse eines Fahrzeugs, z.B. eines Kraftfahrzeugs.

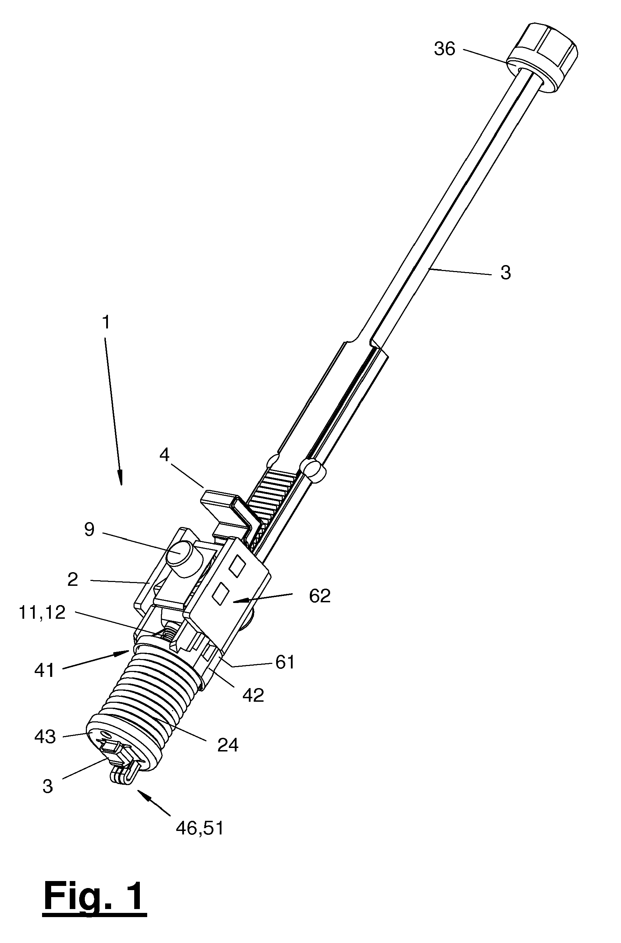

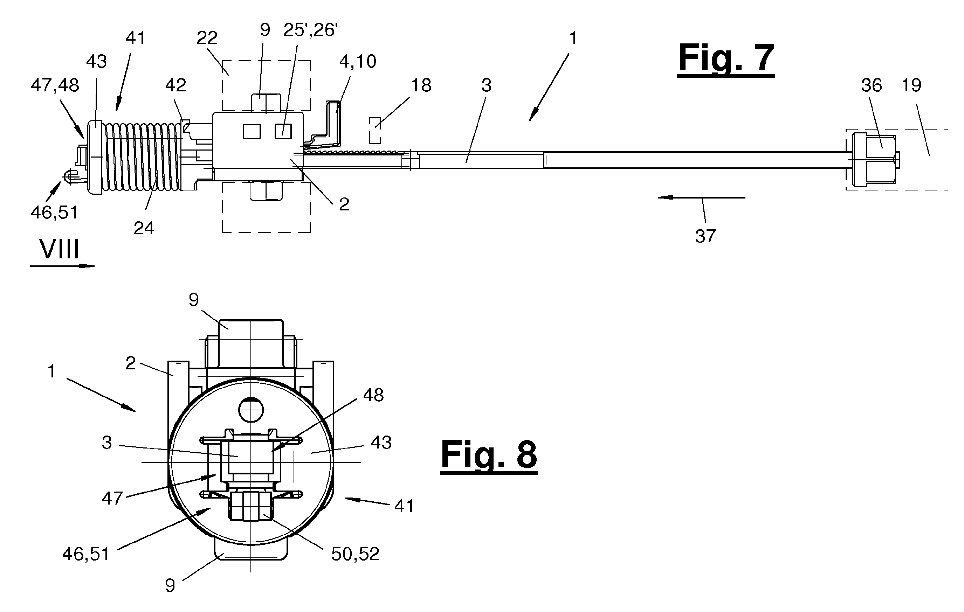

In Figur 1 bis 9 ist die Seilzugeinstellung (1) in verschiedenen Ansichten dargestellt. Die Seilzugeinstellung (1) kann mit einem schematisch in Figur 7 angedeuteten Seilzug (19) verbunden sein. Als Seilzug (19) werden im Sinne der Erfindung auch Bremsgestänge oder dergleichen andere Betätigungsmittel, insbesondere Zugmittel, verstanden. Der Seilzug (19) ist z.B. ein Bremszug. Er kann alternativ auch für andere Zwecke eingesetzt werden.

In der gezeigten Ausführungsform sind diese Komponenten (1,19) Bestandteile einer Bremsanlage für Fahrzeuge, insbesondere einer Feststellbremse, die in den Zeichnungen nicht näher dargestellt ist. Die Bremsanlage oder Feststellbremse besitzt ein Betätigungsorgan (22), z.B. einen schwenkbaren Handbremshebel, mit dem die Seilzugeinstellung (1) betätigt und aktiviert wird. In Figur 7 sind die Anschlussflansche eines Handbremshebels (22) schematisch und in gestrichelter Darstellung gezeigt. Für andere Einsatzzwecke kann ein anderes Betätigungsorgan (22) vorhanden sein.

Die Seilzugeinstellung (1) entspricht in ihrer Grundkonstruktion der vorbekannten Seilzugeinstellung gemäß der WO 97/26162 A1 und der WO 98/57832 A1 oder der DE 20 2006 018 319 U1. Die gezeigte Seilzugeinstellung (1) kann genauso wie die vorbekannten Konstruktionen zur Aufnahme oder Kompensation von Verschleiß in der Bremsanlage und insbesondere Feststellbremse dienen.

Zusätzlich kann die Seilzugeinstellung (1) gemäß der DE 10 2004 016 623 B3 mit einem Andrückelement (21) ausgestattet sein, das beim Anziehen des Betätigungsorgans (22) für die sofortige und sichere Herstellung einer formschlüssigen Verbindung zwischen dem Betätigungsorgan (22) und dem Seilzug (19) sorgt. Das Andrückelement (21) kann alternativ entfallen oder anders als bei der DE 10 2004 016 623 B3 ausgebildet sein.

Die Seilzugeinstellung (1) besteht aus einem Klemmgehäuse (2), in dessen Hohlraum (8) ein Klemmelement (4) und ein mit dem Seilzug (19) verbundenes Zugelement (3) beweglich angeordnet sind. Das Klemmgehäuse (2) besitzt zwei Lager (9), vorzugsweise in Form von entgegengesetzt gerichteten, seitlich abstehenden Lagerzapfen, zur drehbaren Lagerung in den Lagerflanschen des Handbremshebels (22). Bei Betätigung des Handbremshebels (22) wird das Klemmgehäuse (2) mitgenommen und in Anzugrichtung (37) bewegt.

Das Zugelement (3) ist vorzugsweise als Zahnstange ausgebildet und am rückwärtigen Ende über einen Anschluss (36) mit dem Kopf des Seilzugs (19) verbunden. Der hintere Endbereich ist seitlich eingeschnürt und ggf. mit einem zentralen Längsschlitz versehen. Die Zahnstange (3) trägt auf der einen Flachseite eine Verzahnung (6) beliebiger Art, die mit einer entsprechenden Gegenverzahnung am Klemmelement (4) zusammenwirkt, wodurch ein sogenanntes Rastgesperre (6) gebildet wird. Die Zahnstange (3) ragt durch einen Hohlraum (8) des Klemmgehäuses (2) und ist an der Vorderseite mit einer Feder (24) verbunden, die sich am Klemmgehäuse (2) abstützt und die Zahnstange (3) in Anzugsrichtung (37) bewegt.

Die Seilzugeinstellung (1) weist eine Federaufnahme (41) für die Feder (24) und für eine ggf. vorhandene weitere Feder (11) auf, die nachfolgend erläutert wird. Die Federaufnahme (41) besitzt einen Federträger (42), der am Klemmgehäuse (2) abgestützt und vorzugsweise über eine Klemmvorrichtung (62) befestigt wird. Der Federträger (42) greift dabei in das Klemmgehäuse (2) und dessen hohlen Innenraum und kann hier kraftschlüssig und/oder formschlüssig verankert werden. Am Federträger (42) stützt sich die Feder (24) an ihrer Rückseite über eine ring-oder topfartigen Federabstützung (58) ab. Die Federaufnahme (41) weist ferner eine frontseitige Federabstützung (43) auf, die ebenfalls topfförmig ausgebildet sein kann und die am vorderen Ende des Zugelements (3) befestigt ist. Die Feder (24) ist vorzugsweise als Schraubenfeder mit einem großen Durchmesser und einem inneren Hohlraum ausgebildet und wird außenseitig von den Federabstützungen (43,58) umfasst und auch umfangseitig geführt.

Die Zahnstange (3) ist mittels einer mehrseitigen formschlüssigen Führung (23) längsbeweglich im Hohlraum (8) des Klemmgehäuses (2) gelagert. Sie kann sich hierdurch nur axial bewegen und ist in allen anderen Richtungen geführt. Die Führung (23) ist z.B. als im Querschnitt T-förmige Hammerkopfnut ausgebildet, die zwei seitliche Führungsrinnen bildet, in denen seitlich vorstehende punkt- oder leistenförmige Führungsansätze der Zahnstange (3) eintauchen und formschlüssig geführt sind. Die Führung (23) kann von einer im Federträger (42) angeordneten Stangenführung (59) gebildet werden. Deren Ausbildung wird nachstehend erläutert.

Das Klemmelement (4) besteht aus einem schmalen flachen Steg (13) der sich durch den Hohlraum (8) erstreckt und am vorderen Ende in einen bewegten Kopf (14) übergeht, der an der einen Seite eine Verzahnung zur Bildung des Rastgesperres (6) und auf der gegenüberliegenden Seite eine schräge Keilfläche (73) zur Bildung einer Keilführung (7) mit dem Klemmgehäuse (2) aufweist. Am rückwärtigen Ende des Klemmelements (4) ragt vom Steg (13) ein Ansatz (10) quer weg, der sich außerhalb des Hohlraums (8) und des Klemmgehäuses (2) befindet.

Am Kopf (14) des Klemmelements (4) greifen mit Kraftwirkung von vorn ein oder mehrere Federn (11) an, die sich am Federträger (42) abstützen. Die Federn (11) versuchen das Klemmelement (4) gegen die Anzugrichtung (37) zu bewegen und den Kopf (14) an der Keilführung (7) in Kontakt mit der zugeordneten schrägen Wandung (33) des Klemmgehäuses (2) zu bringen.

Der Ansatz (10) wirkt mit einem relativ ortsfesten Anschlag (18) zusammen, der am Gehäuse oder Gestell der Feststellbremse (20) angeordnet ist. Kurz vor Erreichen der Ruhestellung oder Lösestellung des Handbremshebels (22) schlägt das Klemmelement (4) mit dem Ansatz (10) am Anschlag (18) an, wobei das Klemmgehäuse (2) noch ein Stück weiter gegen die Anzugrichtung (37) bewegt wird. Hierdurch wird die Feder (11) gespannt. Das Klemmelement (4) kann mit dem Kopf (14) zur Keilführung (7) hingekippt und dadurch unter Lösung des Rastgesperres (6) von der Zugstange (3) wegbewegt werden. Die Bewegung des Klemmelements (4) in die Lösestellung kann durch eine Zwangsführung (5) unterstützt werden, die am Federträger (42) angeordnet sein kann.

In der Lösestellung bei geöffnetem Rastgesperre (6) (nicht dargestellt) kann die Feder (24) die Zugstange (3) in die Anzugrichtung (37) bewegen und dadurch einen etwaigen Verschleiß im Seilzug (19), im Bremsgestänge oder in den Radbremsen kompensieren. Durch das gelöste Rastgesperre (6) ist eine eventuelle Überkompensation reversibel. Z.B. können verklemmte oder vereiste Bremsbacken, die sich nach Behebung der Störung wieder in die ordnungsgemäße Lage zurückbewegen, dabei ungehindert den Seilzug (19) wieder spannen und dadurch die Zugstange (3) entgegen der Anzugrichtung (37) zurückbewegen.

Figur 7 verdeutlicht die Betriebsstellung der Seilzugeinstellung (1) bei angezogenem Betätigungsorgan (22) oder Handbremshebel. Hierbei wird das Klemmgehäuse (2) in Anzugrichtung (37) bewegt und vom Anschlag (18) gelöst. Die in der Lösestellung komprimierte Feder (11) entspannt sich und bewegt das Klemmelement (4) gegen die Anzugrichtung (37) nach hinten. Hierdurch nähert sich unter der Wirkung der sich verjüngenden Keilführung (7) der Kopf (14) der Zugstange (3) an, wobei die sägezahnförmigen Verzahnungen am Kopf (14) und an der Zahnstange (3) in Eingriff kommen und das Rastgesperre (6) geschlossen wird.

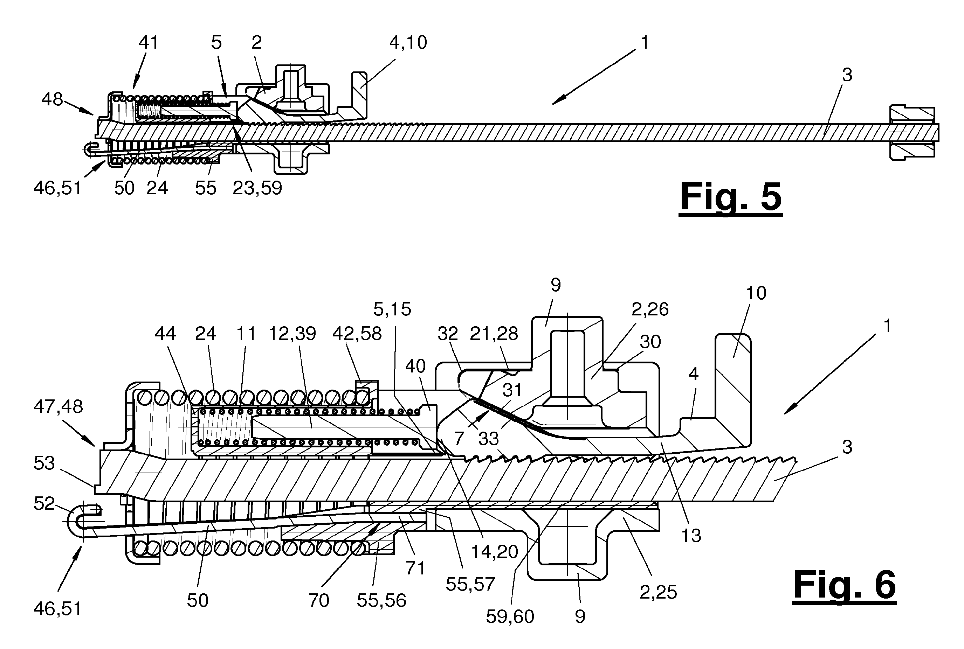

Das nachstehend erläuterte Andrückelement (21) kann den frühen Rasteingriff unterstützen. In der Endstellung von Figur 5 und 6, in der die schrägen Keilflächen am Klemmgehäuse (2) und am Kopf (14) in engem Kontakt liegen, ist die Rastverbindung (6) geschlossen und gesichert. Sobald die Rastverbindung (6) durch das Ineinandergreifen der Verzahnungen geschlossen ist, werden die vom Betätigungsorgan (22) ausgeübten Bewegungen über das mitgeführte Klemmgehäuse (2) auf die Zugstange (3) und den angeschlossenen Seilzug (19) übertragen mit der Folge eines Spannens oder Schließens der Radbremsen.

Das Andrückelement (21) ist am Klemmgehäuse (2) angeordnet und wirkt auf das Klemmelement (4) ein, wobei es eine zum Zugelement (3) und zum Rastgesperre (6) gerichtete Andrückkraft auf das Klemmelement (4) ausübt. Hierbei wirkt das Andrückelement (21) auf den Steg (13) und/oder auf den Kopf (14) ein. Das Andrückelement (21) befindet sich hierbei in einem Freiraum zwischen dem Klemmgehäuse (2) und dem Klemmelement (4), der in der Lösestellung vorhanden ist. Das Andrückelement (21) stützt sich hierbei im Bereich der Keilführung (7) am Klemmgehäuse (2) ab. Das Andrückelement (21) ist z.B. als abgewinkelter Federbügel (28) wie in der DE 10 2004 016 623 B3 ausgebildet. Der Federbügel (28) besteht aus einem geeigneten federelastischen und dabei ausreichend festen Material, z.B. einem Federstahl und kann die Wirkung eines Synchronbleches haben. Er besteht aus einem ersten im Wesentlichen ebenen Schenkel (30), der im mittleren Bereich eine Öffnung (29) aufweist, die auf die Abmessungen des Lagerzapfens (9) abgestimmt ist. Mittels der Öffnung (29) kann der Steg (30) über den Lagerzapfen (9) gestülpt werden und dann auf der ebenen Oberseite der angrenzenden Klemmgehäusebereiche plan aufliegen. Figur 5 und 6 zeigen diese Anordnung.

Vom ersten Schenkel (30) ist der zweite Schenkel (31) über eine runde Biegung (32) schräg abgewinkelt. Die Biegung (32) ist dem Kopf (14) des Klemmelements (4) benachbart. Der zweite Schenkel (31) dient als wirksames Federelement und erstreckt sich in den Hohlraum (8) bzw. Freiraum, wobei er zwischen die schrägen Flächen der Keilführung (7) am Klemmgehäuse (2) und am Kopf (14) des Klemmelements (4) zu liegen kommt. Der Biegewinkel zwischen den Schenkeln (30,31) kann kleiner als der zwischen Oberseite und der schrägen Innenseite (33) der Keilführung (7) gebildete Winkel am Klemmgehäuse (2) sein. Hierdurch kann der zweite Schenkel (31) einerseits an der querliegenden Vorderkante der Innenseite (33) anliegen und dort schräg nach unten zum Kopf (14) und zum Zugelement (3) hin abgewinkelt werden. Der Schenkel (31) erstreckt sich am freien Ende über die schräge Innenseite (33) hinaus bis in den Bereich des Steges (13) des Klemmelements (4) und liegt dort mit elastischen Federdruck an. Das freie Ende des in der unbelasteten Ausgangsstellung im Wesentlichen planen Schenkels (31) ist hierbei zur Bildung einer Anlaufkante geringfügig abgewinkelt. Der zweite Schenkel (31) liegt durch diese Gestaltung auch an der rückwärtigen Querkante der schrägen Innenseite (33) und stützt sich hier federnd ab. Im Bereich zwischen den besagten vorderen und hinteren Querkanten der Innenseite (33) kann in der Lösestellung der Schenkel (31) eine Wölbung bilden, mit der er an der schrägen Keilfläche des Kopfes (14) anliegt oder dort zumindest eng benachbart ist. Figur 16 zeigt die Spannstellung des zweiten Schenkels (31) mit durchgezogenen Linien und die entspannte Lösestellung gestrichelt.

In der Lösestellung ist das Klemmelement (4) am rückwärtigen Ende durch den Anschlag (18) und am vorderen Ende über die Zwangsführung (5) abgestützt und wird in dieser Lage durch den Federbügel (28) gehalten. Sobald das Betätigungsorgan (22) bzw. der Handbremshebel betätigt und angezogen wird, bewegt sich der Kopf (14) des Klemmelements (4) zum Zugelement (3) hin, wobei er vom Federbügel (28) gegen die Leitfläche der Zwangsführung (5) gedrückt wird und an dieser entlang gleitet. Der Federbügel (28) presst dadurch bereits in einem frühen Bewegungsstadium die Verzahnungen des Rastgesperres (6) ineinander und ist dadurch bereits vor einem Kontakt der schrägen Keilflächen der Keilführung (7) wirksam. In der End- oder Spannstellung liegt der Schenkel (31) des Federbügels (28) zwischen den Keilflächen der Keilführung (7) und ist hier plan eingespannt.

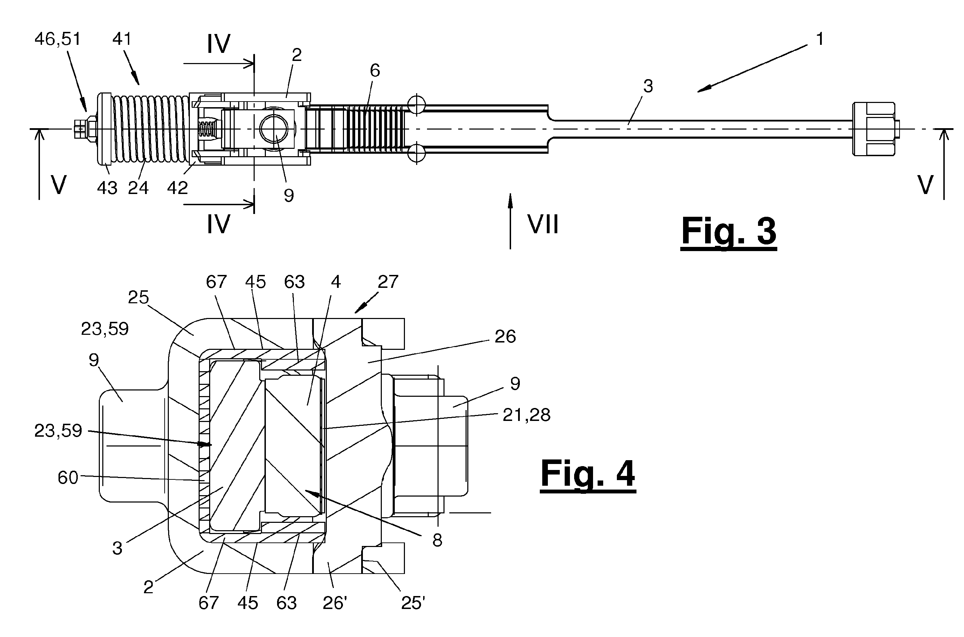

Durch den Einsatz des Andrückelements (21), insbesondere des Federbügels (28) kann ferner eine Zahn-auf-Zahn-Stellung des Rastgesperres (6) vermieden werden. Der Schenkel (31) dreht in Folge der Lasteinleitung das Klemmelement (4) zum Zugelement (3) hin. Durch diese Drehbewegung wird der Berühr-Tangentenwinkel zwischen der Unterseite des Kopfes (14) und der Zahnstange (3) bezogen auf die in Figur 4 horizontale Ausrichtung > 0. Das Andrückelement (21) bewegt dadurch das Klemmelement (4) in eine stabile Lage, in der keine Selbsthemmung besteht. Diese Lage wird erreicht, wenn z.B. der Reibbeiwert zwischen den stationär gehaltenen Federbügeln (28) und dem hierzu relativ in Axialrichtung bewegten Klemmelement (4) bei einer metallischen Werkstoffpaarung < 0,21 ist. Falls es durch äußere Einflüsse, z.B. Toleranzen, Adhäsionskräfte dennoch zu einer kurzfristigen Zwischenstellung kommt, in der die Zähne des Rastgesperres (6) aufeinander liegen, kann durch Aufbringung einer sehr geringen Zugkraft auf die Zahnstange (3) der kritische Zahn übersprungen werden, so dass auf jeden Fall zumindest ein sicheres Einrasten in den nächsten Zahn Gewähr leistet ist. Eine gegenseitige Blockierstellung der Zähne des Rastgesperres (6) wird somit zuverlässig vermieden.

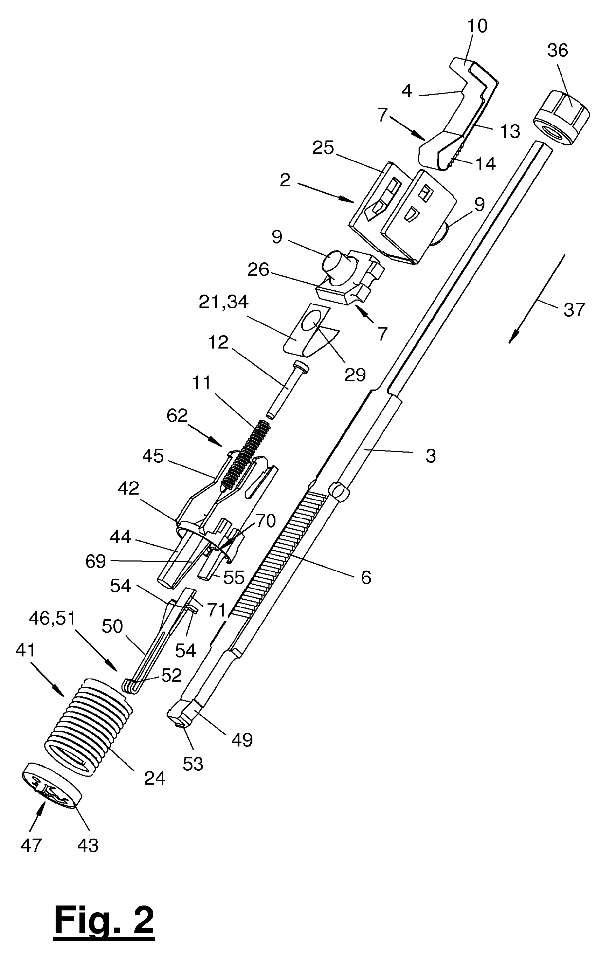

Die Feder (11) ist als im wesentlichen lineare Feder, z.B. als zylindrische Schraubendruckfeder ausgebildet, die entgegen der Anzugrichtung (37) von vorn auf den Kopf (14) des Klemmelements (4) drückt. Die Feder (11) ist im Federträger (42) und einer dort angeformten kanalartigen Federführung (44) abgestützt und geführt und ragt gegen die Anzugrichtung (37) aus der Federführung (44). An dem zum Kopf (14) weisenden Ende trägt die Feder (11) ein Andrückteil (12), welches z.B. als Druckstempel (39) mit einer quer zur Federlängsachse ausgerichteten Druckplatte (40) und einem Stift oder Schaft ausgebildet ist. Die verbreiterte Druckplatte (40) kann am vorstehenden Ende des in den hohlen Innenraum der Schraubendruckfeder gesteckten Stiftes angeordnet sein. Die Feder (11) und der sacklochartige Kanal (44) sind im wesentlichen parallel zum Zugelement (3) bzw. zu dessen Führung (23) ausgerichtet. Die Federführung (44) kann gemäß Figur 2 und 6 außenseitig eine axiale keilförmige Führungsleiste (69) für die äußere Feder (24) aufweisen.

Der Kopf (14) weist an seinem vorderen, freien Ende eine ausbauchende konvexe Kopfwölbung (20) auf, die an der ebenen Druckplatte (40) in Anlage kommt. Durch die Kopfwölbung (14) ist ein Schwenken oder Kippen des Klemmelementes (4) gegenüber der gerade geführten Feder (11) und dem Druckstempel (39) möglich. Beim Lösen der Bremsanordnung und bei der Annäherung an die Anschlagstellung kann die Feder (11) durch diese Gestaltung dem Andrückelement (21) entgegenwirken und das sichere Lösen des Rastgesperres (6) unterstützen.

Figur 1 bis 9 verdeutlichen eine vorteilhafte Ausgestaltung des Klemmgehäuses (2), welches mehrteilig ist und aus mindestens zwei fest oder lösbar miteinander verbundenen Gehäuseteilen (25,26) besteht. Die beiden Gehäuseteile (25,26) können hierbei durch eine formschlüssige Schnappverbindung (27) miteinander verbunden werden und zugleich auch passgenau positioniert werden. Hierbei greifen z.B. seitliche vorstehende Rastnasen oder Nocken (26') am Einsatzteil (26) in entsprechende Öffnungen (25') in den Seitenstegen des U-Teils (25) und können anschließend für eine unlösbare Verbindung verstemmt und in die Öffnungen eingeformt werden. Die beiden Gehäuseteile (25,26) tragen hierbei jeweils einen Lagerzapfen (9), wobei die Zapfen gegenseitig fluchten. Bei der Montage können das Federblech (28) und das Klemmelement (4) wahlweise vor oder nach der Verbindung der Gehäuseteile (25,26) montiert werden. Das Gehäuseteil oder Einsatzteil (26) kann am vorderen Ende schräg abgewinkelt sein und die schräge Wandung (33) des Klemmgehäuses (2) bilden.

Die Feder (24) ist z.B. als zylindrische Schraubendruckfeder ausgebildet, wobei der innere Federdurchmesser so groß gewählt ist, dass ein Abstand oder Freiraum zum flachen Zugelement (3) gebildet wird. In diesem Bereich kann die Federführung (44) angeordnet und im Öffnungsbereich an die quer liegende Wandung des Federträgers (42) angeformt sein.

Die frontseitige Federabstützung (43) kann eine zentrale Öffnung (47) aufweisen, durch welche das Frontende des Zugelements (3) ragt. Die Verbindung kann in beliebiger Weise, z.B. formschlüssig durch eine Verriegelung (48) erfolgen, wobei z.B. das vordere Zugelementende eine umfangseitige Einschnürung (49) aufweist, die durch die Öffnung (47) ragt, wobei durch eine geeignete nicht rotationssymmetrische Formgebung der Öffnung (47) und der Einschnürung (49) und über eine Drehung des Abstütztopfes (43) eine formschlüssige Verbindung und Verriegelung (48) geschaffen werden kann.

Die Seilzugeinstellung (1) weist ferner eine Montagesicherung (46) auf. Diese besteht aus einem Sicherungselement (50), beispielsweise einem Sicherungsbügel, der mittels einer Bügelführung (55) am Federträger (42) geführt und abgestützt sein kann, wobei er durch den Federinnenraum ragt. Das Vorderende des Sicherungsbügels (50) tritt durch eine Öffnung im Abstütztopf (43) nach außen und kann über einen Rastverschluss (51) mit dem Zugelement (3) lösbar verbunden werden. Hierfür weist z.B. der Sicherungsbügel (50) am vorderen Ende ein Rastelement (52) auf, das mit einem am Vorderende des Zugelements (3) angeordneten Rastelement (53) in lösbaren Eingriff treten kann. Das bügelseitige Rastelement (52) kann z.B. in Form einer um ca. 180° gebogenen Rastnase ausgebildet sein. Das andere Rastelement (53) kann z.B. eine stufenförmige Rastaufnahme sein.

Der Sicherungsbügel (50) steht unter einer rückstellenden Federvorspannung, die beim gelösten Rastverschluss (51) die Rastelemente (52,53) auseinander bewegt. Hierfür kann der Sicherungsbügel (50) vorgebogen sein. Alternativ oder zusätzlich kann auch die Bügelführung (55) für eine Vorspannung sorgen. Figur 5 und 6 zeigen den geöffneten Rastverschluss (51) und die gelöste Montagesicherung (46), bei der die Feder (24) und das Zugelement (3) ungehindert funktionieren und sich relativ zum Sicherungsbügel (50) bewegen können. Zum Schließen und ggf. Einrasten der Montagesicherung (46) wird das Zugelement (3) bei geöffnetem Rastgesperre (6) gegen die Anzugrichtung (7) nach hinten geschoben und die Feder (24) dabei soweit komprimiert, bis der Rastverschluss (51) offen liegt und die Rastelemente (52,53) in Eingriff gebracht werden können. In dieser Stellung ragt das Zugelement (3) weit nach hinten und erleichtert die zwängungsfreie Montage der Seilzüge (19). Bei einem erstmaligen Anziehen der Betätigungseinrichtung (22) kann die Montagesicherung (46) selbsttätig durch Rückfedern und Ausrasten des Sicherungsbügels (50) oder durch Einsatz eines Öffnungswerkzeugs geöffnet werden. Sie kann bei Bedarf wieder eingerastet werden.

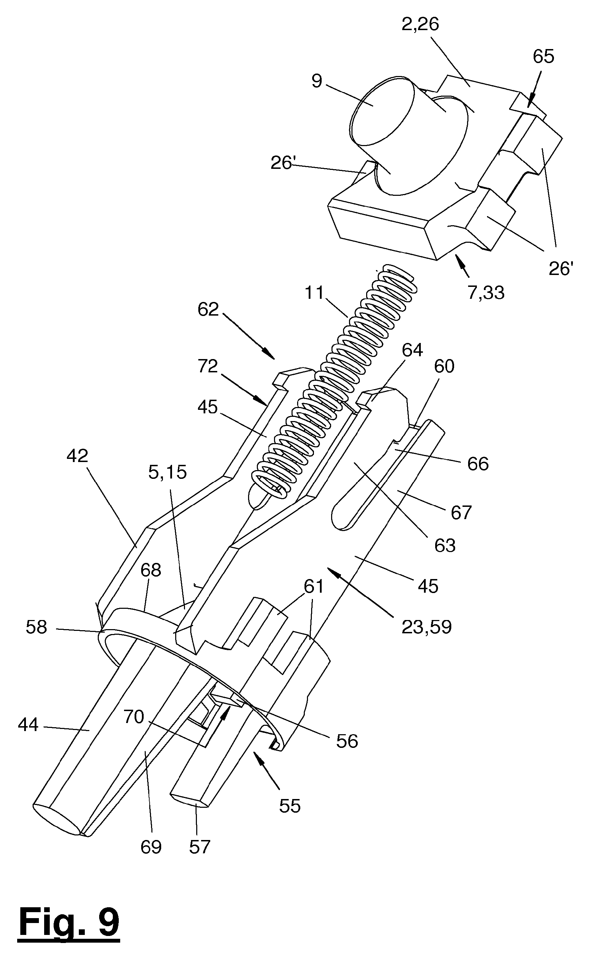

Der Federträger (42) ist in Figur 2 und 9 perspektivisch und vergrößert dargestellt. Der Federträger (42) weist von seiner in etwa mittig liegenden Querwand (68) nach hinten und gegen die Anzugrichtung (37) von der Federabstützung (58) abstehende Stützteile (61) auf, die am vorderen Rand des Klemmgehäuses (2) in Einbaustellung anschlagen. Ferner hat der Federträger (42) einen oder mehrere, vorzugsweise zwei, ebenfalls nach hinten weisende Verbindungsstege (45), die von der Querwand (68) ausgehen und seitlich zurückversetzt innerhalb der Stützteile (61) verlaufen. Die plattenartigen Verbindungsstege (45) haben z.B. eine stehende bzw. aufrechte Lage und ragen beidseits neben dem Zugelement (3) in das Klemmgehäuse (2) und dessen inneren Hohlraum (8), wobei sie das Gehäuseteil (26) untergreifen.

Über die Verbindungsstege (45) kann die Klemmvorrichtung (62) gebildet werden. Hierfür weisen die Verbindungsstege (45) z.B. einen längslaufenden und zum rückwärtigen Ende hin sich erstreckenden Schlitz (66) auf, durch den ein unterer Stegteil (67) und darüber ein Federbügel (63) gebildet wird. Dieser Federbügel (63) kann dicker als das Stegteil (67) sein und kann am Klemmgehäuse (2), insbesondere am Gehäuseteil (26), einrasten. Hierfür weist er am rückwärtigen freien Ende zumindest eine einseitige Keilform mit einem nach oben ragenden Vorsprung (64) auf, mit dem er in Einbaustellung in eine rückwärtige Ausnehmung (65) am oberen Gehäuseteil (26) greift. Der Federbügel (63) kann mit seiner Oberseite (72) an der Unterseite des Gehäuseteils (26) anliegen und eine entsprechend angepasste Form haben. Die Anlage kann stellenweise oder durchgängig über die Länge des Gehäuseteils (26) in Anzugrichtung (37) vorhanden sein, wobei die Oberseite (72) z.B. einen in Figur 9 gezeigten abgewinkelten Verlauf entsprechend der schrägen Wandung (33) am Gehäuseteil (26) aufweist.

Der Federträger (42) weist die vorerwähnte Führung (59) für das Zugelement (3) auf. Diese kann z.B. durch ein Bodenteil (60) gebildet werden, welches sich von der besagten Mittelwand nach hinten erstreckt und zwischen den seitlichen Verbindungsstegen (45) verläuft und in das untere Stegteil (67) übergeht. Hierdurch wird ein Führungskanal gebildet, der an der Oberseite durch die verdickten und nach innen vorspringenden Federbügel (63) eine Hammerkopfform erhält. Figur 4 zeigt im Querschnitt diese Ausgestaltung und die hierdurch gebildete formschlüssige Führung (23) für das Zugelement (3).

Für die Bildung der Zwangsführung (5) kann an der Mittelwand (68) nach hinten eine Anlaufschräge (15) wegragen, die z.B. keilförmig ausgebildet ist und oberhalb des Durchlasskanals der Stangenführung (59) schwebt. Hier kann der Kopf (14) des Klemmelements (4) aufgleiten und schräg nach oben sowie zur Keilführung (7) hin abgelenkt werden, wenn das Klemmelement (4) am Anschlag (18) auftrifft.

Zur Bildung der vorerwähnten Bügelführung (55) können an der Vorderseite des Federträgers (42) eine obere Führungsnase (56) und eine untere Führungsnase (57) im Abstand unter Bildung eines Einbauschlitzes (70) oder eines Montagespalts für den Sicherungsbügel (50) angeordnet sein. Die untere Führungsnase (57) kann zugleich ein Teil der Federabstützung (58) sein. Die untere Führungsnase (57) ist länger als die obere Führungsnase (56) und hat an der Oberseite auch eine endseitige und nach unten gerichtete Abschrägung zur Abstützung des Sicherungsbügels (50) in der Öffnungsstellung von Figur 6.

Wie Figur 2 verdeutlicht, kann der Sicherungsbügel (50) am rückwärtigen Ende einen z.B. geraden, zungenartigen Stützsteg (71) aufweisen, mit dem er im Einbauschlitz oder Montagespalt (70) von vorn eingesteckt und im Klemmschluss, durch Kleben oder auf andere Weise fixiert werden kann. Neben dem Stützsteg (71) kann der Sicherungsbügel (50) mindestens einen seitlich ausgestellten und abgekanteten Seitenarm (54) aufweisen, mit dem er seitlich an der unteren Führungsnase (57) anliegt. Der oder die Seitenarme (54) können auch für eine Fixierung des Sicherungsbügels (50) in Anzugrichtung (37) dienen und sich am Federträger (42) verankern, z.B. durch formschlüssigen Eingriff. Vorzugsweise sind zwei beidseitige Seitenarme (54) vorhanden. Sie können auch um die Bügellängsachse gedreht und mit ihren abgekanteten Enden schräg ausgestellt sein.

Abwandlungen der gezeigten Ausführungsformen sind in verschiedener Weise möglich. Der Federhalter (42) kann über die gezeigten Ausführungsvarianten hinaus in seiner Gestaltung, Funktion und Einbaulage abgewandelt werden. Er kann insbesondere weniger Führungsfunktionen haben. Der Eingriff in den Innenraum des Klemmgehäuses (2) kann auf andere Weise erfolgen. Insbesondere kann die federnde und klemmende bzw. einrastende Ausbildung des oder der Verbindungsstege (45) in anderer Weise ausgeführt sein. Auch die konstruktive Gestaltung des Klemmgehäuses (2) und der anderen Teile der Seilzugeinstellung (1) können abgewandelt werden. Auch die Montagesicherung (46) kann abgewandelt werden.

Daneben sind beliebige andere konstruktive Varianten möglich. Ferner kann die Grundgestaltung des Zugelements (3) abgewandelt werden. Auf die Zwangsführung (5) kann verzichtet werden. Auch die konstruktive Gestaltung der Komponenten Klemmelement (4), Klemmgehäuse (2), Zugelement (3) usw. kann variieren. Sie können z.B. gemäß der EP 0 895 909 A2 gestaltet sein, wobei das Klemmelement (4) mehrteilig und in Form von konischen Klemmbacken in Verbindung mit einer zylindrischen Zahnstange (3) und einem bereichsweise konischen Klemmgehäuse ausgebildet sind. Gleiches gilt für die Ausgestaltung des Betätigungsorgans (22), des Seilzugs (19) und der vorhandenen Anschlusskonstruktionen, z.B. des Anschlusses (36), der gemäß der DE 20 2006 018 319 U1 ausgebildet sein kann.

### BEZUGSZEICHENLISTE

- 1: Seilzugeinstellung
- 2: Klemmgehäuse
- 3: Zugelement, Zugstange
- 4: Klemmelement
- 5: Zwangsführung
- 6: Rastgesperre, Verzahnung
- 7: Keilführung
- 8: Hohlraum
- 9: Lager, Lagerzapfen
- 10: Ansatz
- 11: Feder
- 12: Andrückteil
- 13: Steg am Klemmelement
- 14: Kopf am Klemmelement
- 15: Anlaufschräge
- 18: Anschlag
- 19: Seilzug, Bremszug
- 20: Kopfwölbung
- 21: Andrückelement
- 22: Betätigungsorgan, Handbremshebel
- 23: Führung Zugelement
- 24: Feder, Spannfeder
- 25: Gehäuseteil, Bügel
- 25': Öffnung
- 26: Gehäuseteil, Einsatz
- 26': Rastnase., Nocke
- 27: Schnappverbindung
- 28: Federbügel, Synchronblech
- 29: Öffnung
- 30: erster Schenkel, Halterung
- 31: zweiter Schenkel, Federelement
- 32: Biegung
- 33: Innenseite Einsatz
- 34 35 36: Anschluss
- 37: Anzugrichtung
- 38: Schenkelrand
- 39: Druckstempel
- 40: Druckplatte
- 41: Federaufnahme
- 42: Federträger
- 43: Federabstützung, Abstütztopf
- 44: Kanal, Federführung
- 45: Verbindungssteg
- 46: Montagesicherung
- 47: Öffnung
- 48: Verriegelung
- 49: Einschnürung an Zugelement
- 50: Sicherungsbügel
- 51: Rastverschluss, Bajonettverschluss
- 52: Rastelement, Rastnase
- 53: Rastelement, Rastaufnahme
- 54: Seitenarm
- 55: Bügelführung
- 56: Führungsnase oben
- 57: Führungsnase unten
- 58: Federabstützung, Federführung
- 59: Führung Zugelement, Stangenführung
- 60: Bodenteil
- 61: Stützteil
- 62: Klemmvorrichtung
- 63: Federbügel
- 64: Vorsprung
- 65: Ausnehmung
- 66: Schlitz
- 67: Stegteil
- 68: Mittelwand
- 69: Führungsleiste
- 70: Einbauschlitz
- 71: Stützsteg
- 72: Oberseite
- 73: Keilfläche

## Patentansprüche

1. Seilzugeinstellung bestehend aus einem Klemmgehäuse (2), in dem ein Zugelement (3) und ein Klemmelement (4) beweglich geführt sind, wobei das Zugelement (3) und das Klemmelement (4) mit einem Rastgesperre (6) versehen sind und über eine Keilführung (7) in Eingriff miteinander bringbar sind und das Klemmgehäuse (2) und das Zugelement (3) mit einem Betätigungsorgan (22) und mindestens einem Seilzug (19) verbunden sind und eine Feder (24) auf das Zugelement (3) in Anzugrichtung (37) einwirkt, wobei die Seilzugeinstellung (1) eine Federaufnahme (41) mit einem Federträger (42) aufweist, der frontseitig am Klemmgehäuse (2) angeordnet ist, **dadurch gekennzeichnet, dass** der Federträger (42) in das Klemmgehäuse (2) greift.

2. Seilzugeinstellung nach Anspruch 1, **dadurch gekennzeichnet, dass** die Federaufnahme (41) eine mit dem Zugelement (3) verbundene Federabstützung (43) aufweist.

3. Seilzugeinstellung nach Anspruch 1 oder 2, **dadurch gekennzeichnet, dass** der Federträger (42) eine frontseitige ring- oder topfartige Federabstützung (58) für eine Schraubenfeder (24) aufweist.

4. Seilzugeinstellung nach Anspruch 1, 2 oder 3, **dadurch gekennzeichnet, dass** der Federträger (42) eine weitere Federführung (44) für eine auf das Klemmelement (4) einwirkende Feder (11) aufweist.

5. Seilzugeinstellung nach einem der vorhergehenden Ansprüche, **dadurch gekennzeichnet, dass** der Federträger (42) mit dem Klemmgehäuse (2) durch eine Klemmvorrichtung (62) verbunden ist.

6. Seilzugeinstellung nach einem der vorhergehenden Ansprüche, **dadurch gekennzeichnet, dass** der Federträger (42) Verbindungsstege (45) aufweist, die in das Klemmgehäuse (2) ragen.

7. Seilzugeinstellung nach einem der vorhergehenden Ansprüche, **dadurch gekennzeichnet, dass** die Verbindungsstege (45) einen am Klemmgehäuse (2) einrastbaren Federbügel (63) aufweisen.

8. Seilzugeinstellung nach einem der vorhergehenden Ansprüche, **dadurch gekennzeichnet, dass** das Klemmgehäuse (2) mehrteilig (25,26) ausgebildet ist, wobei der Federträger (42) mit einem Einsatz (26) des Klemmgehäuse (2) verbindbar ist.

9. Seilzugeinstellung nach einem der vorhergehenden Ansprüche, **dadurch gekennzeichnet, dass** der Federträger (42) eine Führung (59) für das Zugelement (3) aufweist.

10. Seilzugeinstellung nach einem der vorhergehenden Ansprüche, **dadurch gekennzeichnet, dass** der Federträger (42) eine Zwangsführung (5) für das Klemmelement (4) aufweist.

11. Seilzugeinstellung nach einem der vorhergehenden Ansprüche, **dadurch gekennzeichnet, dass** die Seilzugeinstellung (1) eine Montagesicherung (46) aufweist, die bei einem Anziehen einer Betätigungseinrichtung (22) selbsttätig lösbar ist.

12. Seilzugeinstellung nach einem der vorhergehenden Ansprüche, **dadurch gekennzeichnet, dass** der Federträger (42) eine Führung (55) für einen Sicherungsbügel (50) einer Montagesicherung (46) aufweist.

13. Seilzugeinstellung nach einem der vorhergehenden Ansprüche, **dadurch gekennzeichnet, dass** der Federträger (42) einen Einbauschlitz (70) für einen Sicherungsbügel (50) einer Montagesicherung (46) aufweist.

14. Seilzugeinstellung nach einem der vorhergehenden Ansprüche, **dadurch gekennzeichnet, dass** ein Sicherungsbügel (50) am rückwärtigen Ende einen Stützsteg (71) und mindestens einen seitlich ausgestellten und abgekanteten Seitenarm (54) aufweist.

15. Seilzugeinstellung nach einem der vorhergehenden Ansprüche, **dadurch gekennzeichnet, dass** ein Sicherungsbügel (50) am vorderen Ende ein Rastelement (52) aufweist, das mit einem am Vorderende des Zugelements (3) angeordneten Rastelement (53) in lösbaren Eingriff bringbar ist.

## Claims

1. Cable-pull adjustment composed of a clamp housing (2) in which a traction element (3) and a clamp element (4) are guided in a movable manner, wherein the traction element (3) and the clamp element (4) are provided with a latching lock (6) and are mutually engageable by way of a wedge-type guide (7), and the clamp housing (2) and the traction element (3) are connected to an actuation element (22) and at least one cable pull (19), and a spring (24) in the tightening direction (37) acts on the traction element (3), wherein the cable-pull adjustment (1) has a spring receptacle (41) having a spring mount (42) which is disposed on the front of the clamp housing (2), **characterized in that** the spring mount (42) engages in the clamp housing (2).

2. Cable-pull adjustment according to Claim 1, **characterized in that** the spring receptacle (41) has a spring support (43) which is connected to the traction element (3).

3. Cable-pull adjustment according to Claim 1 or 2, **characterized in that** the spring mount (42) has a front-side annular or cup-like spring support (58) for a helical spring (24).

4. Cable-pull adjustment according to Claim 1, 2, or 3, **characterized in that** the spring mount (42) has a further spring guide (44) for a spring (11) which acts on the clamp element (4).

5. Cable-pull adjustment according to one of the preceding claims, **characterized in that** the spring mount (42) is connected to the clamp housing (2) by way of a clamping device (62).

6. Cable-pull adjustment according to one of the preceding claims, **characterized in that** the spring mount (42) has connection webs (45) which protrude into the clamp housing (2).

7. Cable-pull adjustment according to one of the preceding claims, **characterized in that** the connection webs (45) have a spring bracket (63) which is latchable to the clamp housing (2).

8. Cable-pull adjustment according to one of the preceding claims, **characterized in that** the clamp housing (2) is configured so as to be multipartite (25, 26), wherein the spring mount (42) is connectable to an insert (26) of the clamp housing (2).

9. Cable-pull adjustment according to one of the preceding claims, **characterized in that** the spring mount (42) has a guide (59) for the traction element (3).

10. Cable-pull adjustment according to one of the preceding claims, **characterized in that** the spring mount (42) has a positive guide (5) for the clamp element (4).

11. Cable-pull adjustment according to one of the preceding claims, **characterized in that** the cable-pull adjustment (1) has an assembly safeguard (46) which is releasable in a self-acting manner when an actuation installation (22) is tightened.

12. Cable-pull adjustment according to one of the preceding claims, **characterized in that** the spring mount (42) has a guide (55) for a locking bracket (50) of an assembly safeguard (46).

13. Cable-pull adjustment according to one of the preceding claims, **characterized in that** the spring mount (42) has an installation slot (70) for a locking bracket (50) of an assembly safeguard (46).

14. Cable-pull adjustment according to one of the preceding claims, **characterized in that** a locking bracket (50) at the rear end has a support web (71) and at least one folded lateral arm (54) which is laterally exposed.

15. Cable-pull adjustment according to one of the preceding claims, **characterized in that** a locking bracket (50) at the front end has a latching element (52) which is releasably engageable with a latching element (53) which is disposed at the front end of the traction element (3) .

## Revendications

1. Dispositif de réglage de câble, constitué d'un boîtier de serrage (2) dans lequel un élément de traction (3) et un élément de serrage (4) sont guidés de façon mobile, l'élément de traction (3) et l'élément de serrage (4) étant pourvus d'un dispositif d'encliquetage (6) et pouvant être mis en prise l'un avec l'autre par le biais d'une clavette de guidage (7), et le boîtier de serrage (2) et l'élément de traction (3) étant reliés à un organe d'actionnement (22) et à au moins un câble (19), et un ressort (24) agissant sur l'élément de traction (3) dans la direction de traction (37), le dispositif de réglage de câble (1) comportant un logement de ressort (41) avec un support de ressort (42), lequel est agencé du côté avant du boîtier de serrage (2), **caractérisé en ce que** le support de ressort (42) s'engage dans le boîtier de serrage (2).

2. Dispositif de réglage de câble selon la revendication 1, **caractérisé en ce que** le logement de ressort (41) comporte un appui de ressort (43) relié à l'élément de traction (3).

3. Dispositif de réglage de câble selon la revendication 1 ou 2, **caractérisé en ce que** le support de ressort (42) comporte un appui de ressort (58) du côté avant, du genre anneau ou pot, pour un ressort hélicoïdal (24).

4. Dispositif de réglage de câble selon la revendication 1, 2 ou 3, **caractérisé en ce que** le support de ressort (42) comporte un guidage de ressort supplémentaire (44) pour un ressort (11) agissant sur l'élément de serrage (4).

5. Dispositif de réglage de câble selon l'une des revendications précédentes, **caractérisé en ce que** le support de ressort (42) est relié au boîtier de serrage (2) à l'aide d'un dispositif de serrage (62) .

6. Dispositif de réglage de câble selon l'une des revendications précédentes, **caractérisé en ce que** le support de ressort (42) comporte des barrettes de liaison (45) faisant saillie dans le boîtier de serrage (2).

7. Dispositif de réglage de câble selon l'une des revendications précédentes, **caractérisé en ce que** les barrettes de liaison (45) comportent un étrier à ressort (63) encliquetable sur le boîtier de serrage (2).

8. Dispositif de réglage de câble selon l'une des revendications précédentes, **caractérisé en ce que** le boîtier de serrage (2) est conçu en plusieurs pièces (25, 26), le support de ressort (42) pouvant être relié à un insert (26) du boîtier de serrage (2).

9. Dispositif de réglage de câble selon l'une des revendications précédentes, **caractérisé en ce que** le support de ressort (42) comporte un guidage (59) pour l'élément de traction (3).

10. Dispositif de réglage de câble selon l'une des revendications précédentes, **caractérisé en ce que** le support de ressort (42) comporte un guidage forcé (5) pour l'élément de serrage (4).

11. Dispositif de réglage de câble selon l'une des revendications précédentes, **caractérisé en ce que** le dispositif de réglage de câble (1) comporte un élément de montage (46) apte à se détacher automatiquement lors d'une traction sur un dispositif d'actionnement (22).

12. Dispositif de réglage de câble selon l'une des revendications précédentes, **caractérisé en ce que** le support de ressort (42) comporte un guidage (55) pour un étrier de blocage (50) d'un élément de montage (46).

13. Dispositif de réglage de câble selon l'une des revendications précédentes, **caractérisé en ce que** le support de ressort (42) comporte une fente d'encastrement (70) pour un étrier de blocage (50) d'un élément de montage (46).

14. Dispositif de réglage de câble selon l'une des revendications précédentes, **caractérisé en ce qu'**un étrier de blocage (50) comporte une âme d'appui (71) et au moins un bras latéral (54) coudé et orienté latéralement, à son extrémité arrière.

15. Dispositif de réglage de câble selon l'une des revendications précédentes, **caractérisé en ce que** l'étrier de blocage (50) comporte un élément d'encliquetage (52) à son extrémité avant, lequel peut être engagé de façon amovible dans un élément d'encliquetage (53) agencé à l'extrémité avant de l'élément de traction (3).
